(19) Europäisches Patentamt
European Patent Office
Office européen des brevets

(11) Numéro de publication : 0 336 795 B1

(12) # FASCICULE DE BREVET EUROPEEN

(45) Date de publication du fascicule du brevet : 11.09.91 Bulletin 91/37

(51) Int. Cl.[5] : G01P 9/02, G01P 15/14, G01C 19/02, G01C 19/28

(21) Numéro de dépôt : 89400678.2

(22) Date de dépôt : 10.03.89

(54) **Capteur inertiel composite du type mécanique.**

(30) Priorité : 16.03.88 FR 8803398

(43) Date de publication de la demande : 11.10.89 Bulletin 89/41

(45) Mention de la délivrance du brevet : 11.09.91 Bulletin 91/37

(84) Etats contractants désignés : AT BE CH DE ES FR GB GR IT LI LU NL SE

(56) Documents cités :
GB-A- 2 061 514
US-A- 3 987 555
US-A- 4 095 477
US-A- 4 296 639

(56) Documents cités :
PATENT ABSTRACTS OF JAPAN, vol. 10, no. 106 (P-449)[2103], 22 avril 1986; & JP-A-60 237 313 (TOKYO KEIKI K.K.) 26-11-1985
IDEM

(73) Titulaire : SOCIETE D'APPLICATIONS GENERALES D'ELECTRICITE ET DE MECANIQUE SAGEM
6, Avenue d'Iéna
F-75783 Paris Cédex 16 (FR)

(72) Inventeur : Martin, Frédéric
18, Avenue Carnot
F-78600 Maisons Lafitte (FR)

(74) Mandataire : Jacquelin, Marc-Henri et al
Cabinet PLASSERAUD 84, rue d'Amsterdam
F-75009 Paris (FR)

EP 0 336 795 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention est relative à un capteur inertiel composite du type mécanique pour la mesure des vitesses angulaires et des accélérations linéaires.

Jusqu'à ce jour, dans le domaine des capteurs inertiels du type mécanique, lorsqu'il était nécessaire de mesurer des vitesses angulaires et des accélérations linéaires, on devait avoir recours d'une part à un gyroscope (pour la mesure des vitesses angulaires), et d'autre part à un accéléromètre (pour la mesure des accélérations linéaires).

On a proposé un capteur composite tel que celui décrit dans le brevet JP A 60-237313 et dont les caractéristiques sont reprises dans le préambule de la revendication 1 : toutefois, les indications fournies par un capteur composite selon ce brevet n'étaient pas satisfaisantes en raison du manque de sensibilité du capteur aux accélérations linéraires dans un plan perpendiculaire à l'axe de rotation arbre d'entraînement-rotor.

On connaissait par ailleurs des capteurs inertiels composites qui n'étaient pas du type mécanique et qui, de ce fait, présentaient les inconvénients, notamment en ce qui concerne leur prix de revient élevé, inhérents aux capteurs inertiels "non mécaniques".

L'invention propose donc un capteur inertiel composite d'un type mécanique particulièrement simple et donc d'un prix de revient réduit, mais qui présente également une grande sensibilité aux accélérations linéaires dans un plan perpendiculaire à l'axe de rotation arbre d'entraînement-rotor.

Le capteur conforme à l'invention comporte :

— un rotor,
— un arbre d'entraînement coaxial audit rotor et maintenu par des moyens à paliers,
— des moyens moteurs pour communiquer à cet arbre d'entraînement un mouvement de rotation,
— un dispositif à moteurs couples pour exercer sur le rotor au moins trois forces,
— un dispositif détecteur pour déterminer la position du rotor par rapport à la structure du capteur.

Le rotor et l'arbre d'entraînement sont mécaniquement reliés par une jante souple déformable élastiquement ; le point d'intersection de cette jante souple avec l'axe de rotation du rotor définit le centre de positionnement O du rotor.

Selon l'invention, ce capteur inertiel composite est caractérisé par la combinaison suivante :

— la jante souple est agencée pour laisser au susdit rotor trois degrés de liberté, à savoir un degré de liberté en translation selon l'axe de rotation arbre d'entraînement-rotor, et deux degrés de liberté en rotation autour de deux axes formant un trièdre avec ledit axe de rotation,
— le centre de positionnement O du rotor est décalé par rapport à son centre d'inertie G,
— le dispositif à moteurs couples est agencé pour exercer sur le rotor trois forces parallèles à son axe de rotation.

La disposition consistant à décaler le centre de positionnement O du rotor par rapport à son centre d'inertie G permet d'introduire un balourd permettant d'améliorer la sensibilité du capteur aux accélérations linéaires dans un plan perpendiculaire à l'axe de rotation arbre d'entraînement-rotor.

Le décalage entre le centre de positionnement O et le centre d'inertie G peut être avantageusement de 0,5 mm de manière à créer un balourd de 0,2 g/cm pour un capteur dont le diamètre du rotor est d'environ 15 mm et la vitesse de rotation dudit rotor de 500 Hz.

Compte tenu du fait que l'on peut donc donner au balourd du rotor une valeur appropriée, on dispose donc d'un capteur composite dont le rotor est le siège de forces et le siège de moments qui sont provoqués par des vitesses angulaires et/ou des accélérations linéaires. La valeur de ces forces ou de ces moments peut donc être adaptée à la sensibilité souhaitée pour la mesure des vitesses angulaires et/ou la mesure des accélérations linéaires.

Par ailleurs, l'association de deux capteurs identiques selon l'invention, et seulement de deux capteurs, constitue un système permettant de mesurer les trois composantes de la vitesse angulaire et les trois composantes de l'accélération linéaire.

Si, dans une telle association de deux capteurs identiques selon l'invention, on fait appel à un asservissement numérique multiplexé sur chacune des six voies, il est possible

— de modéliser les défauts répétitifs des capteurs, ces défauts étant mémorisés dans une mémoire permanente, et soustraits de la mesure à effectuer par l'unité de traitement associé au système,
— de supprimer les composants électroniques généralement utilisés pour constituer la fonction de transfert entre le signal représentant la position de l'élément sensible et la commande constituée par le courant traversant le moteur-couple.

Selon une disposition avantageuse de l'invention, la jante souple est constituée par une membrane circulaire pleine perpendiculaire au susdit axe de rotation, présentant, de par sa structure, une raideur radiale linéaire élevée, une raideur axiale linéaire nulle aux environs de son point d'équilibre, une raideur angulaire

élevée selon l'axe de rotation, et une raideur angulaire, selon un axe orthogonal à l'axe de rotation, nulle pour une vitesse de rotation donnée.

Constructivement, il est avantageux de faire comporter au dispositif à moteurs couples trois moteurs couples disposés à cent vingt degrés et exerçant sur le rotor trois forces parallèles à l'axe de rotation arbre d'entraînement-rotor.

Constructivement, il est avantageux de faire comporter au dispositif détecteur trois détecteurs disposés à cent vingt degrés.

L'invention pourra de toute façon être bien comprise à l'aide du complément de description qui suit ainsi que des dessins ci-annexés, lesquels complément et dessins sont relatifs à des modes de réalisation préférés de l'invention et ne comportent bien entendu aucun caractère limitatif.

La figure 1 de ces dessins est une coupe schématique d'un capteur établi conformément à l'invention.

La figure 2 est une vue en perspective schématique montrant l'association de deux capteurs conformes à l'invention.

La figure 3 est un schéma montrant la réalisation d'un dispositif électronique associé à l'invention.

Les figures 4 et 5 sont des illustrations d'un schéma électrique montrant la réalisation d'un élément important de l'invention (capteur).

La figure 6 est une coupe axiale montrant la réalisation d'un autre élément important de l'invention (moteur couple).

La figure 7 est une coupe partielle selon la ligne VII-VII de la figure 6.

Le capteur inertiel montré sur la figure 1 comporte un rotor 1, un arbre d'entraînement 5 coaxial au rotor 1 et maintenu par des paliers 4, et des moyens moteurs 2, 8 pour communiquer à cet arbre d'entraînement 5 un mouvement de rotation.

Ces moyens moteurs 2, 8 sont constitués

— par un stator 2 sur lequel sont montés des bobinages alimentés en tension alternative et produisant dans un entrefer un champ magnétique tournant à une vitesse d'entraînement $\omega$,

— par un rotor 8 monté sur l'arbre d'entraînement 5.

Le rotor 1 et l'arbre d'entraînement 5 sont reliés par une jante souple 3 déformable élastiquement. Le point d'intersection de cette jante souple avec l'axe de rotation du rotor définit le centre de positionnement O du rotor.

La jante souple 3 est agencée pour laisser au rotor 1 trois degrés de liberté, à savoir

— un degré de liberté en translation selon l'axe de rotation arbre d'entraînement 5-rotor 1,

— et deux degrés de liberté en rotation autour de deux axes formant un trièdre avec l'axe de rotation arbre d'entraînement 5-rotor 1.

Il est prévu un dispositif à moteurs couples, avantageusement constitué par trois moteurs couples 6, disposés à cent vingt degrés pour exercer sur le rotor 1 trois forces F1, F2, F3 parallèles à l'axe de rotation arbre d'entraînement 5-rotor 1.

Il est prévu un dispositif détecteur, avantageusement constitué par trois détecteurs 7 disposés à cent vingt degrés pour déterminer la position de trois points du rotor 1 par rapport à la structure du capteur.

Le centre de positionnement O du rotor 1 est décalé par rapport à son centre d'inertie G (figure 1).

La jante souple 3 peut avantageusement être constituée par une membrane circulaire pleine perpendiculaire au susdit axe de rotation, présentant, de par sa structure, une raideur radiale linéaire élevée, une raideur axiale linéaire nulle aux environs de son point d'équilibre, une raideur angulaire élevée selon l'axe de rotation, et une raideur angulaire, selon un axe orthogonal à l'axe de rotation, nulle pour une vitesse de rotation donnée.

Pour obtenir la mesure complète des trois composantes de la vitesse angulaire $\Omega$ ($\Omega_x$, $\Omega_y$, $\Omega_z$) et de l'accélération linéaire $\Gamma$ ($\Gamma_x$, $\Gamma_y$, $\Gamma_z$), il faut normalement, comme montré sur la figure 2, utiliser deux capteurs selon l'invention associés à un dispositif électronique dont il sera plus explicitement question ci-après.

Le premier capteur A est repéré dans le trièdre formé par l'axe de rotation $O_z$ arbre d'entraînement 5-rotor 1, les axes $O_y$, $O_x$ complétant le trièdre.

Le second capteur B est repéré dans le trièdre formé par l'axe de rotation $O_x$ arbre d'entraînement 5-rotor 1, les axes $O_z$, $O_y$ complétant le trièdre.

Ce dispositif électronique a pour rôle :

— de communiquer aux moyens moteurs 2, 8 une vitesse constante $\omega$,

— d'exciter les détecteurs 7 (capacitifs ou inductifs) en tensions alternatives et de générer un signal continu proportionnel aux déplacements de chaque rotor 1, à partir des signaux induits,

— d'asservir en position, aux zéros des détecteurs, chaque rotor 1 en envoyant dans les moteurs couples 6 des courants, donc en créant les forces nécessaires.

Le principe de fonctionnement est alors le suivant :

Soient $\Omega$ (de composantes $\Omega_x$, $\Omega_y$, $\Omega_z$) et $\Gamma$ (de composantes $\Gamma_x$, $\Gamma_y$, $\Gamma_z$) les vitesses angulaires et accélérations linéaires appliquées au capteur. Les projections sont évaluées par rapport à un référentiel $O_x$,$O_y$, $O_z$

(figure 2), lié au capteur, O étant le centre de positionnement défini par la membrane 3, m la masse de l'élément sensible, G son centre d'inertie (on posera OG = d), H le moment cinétique du rotor 1 évalué suivant Oz et R le rayon sur lequel s'appliquent les forces.

On négligera dans un premier temps les forces de liaisons résiduelles apportées par la membrane.

• Pour maintenir en équilibre relatif le rotor 1 du capteur par rapport à sa structure, l'électronique d'asservissement doit engendrer dans les trois moteurs couples des courants provoquant les forces $F_{1/1}$, $F_{1/2}$, $F_{1/3}$ telles que :

$\frac{\sqrt{3}}{2}(F_{1/3} - F_{1/2}) = -H\Omega_y - md\,\Gamma_y$ (-proj. des moments/$O_x$)

$\frac{-R}{2}(F_{1/3} - F_{1/2}) = H\Omega_x + md\,\Gamma_x$ (-proj. des moments/$O_x$)

$F_{1/1} + F_{1/2} + F_{1/3} = m\,\Gamma_x$ (-proj. des forces/$O_z$)

Avec un seul capteur, les trois données $F_{1/1}$, $F_{1/2}$, $F_{1/3}$ ne permettent pas de connaître les cinq inconnues $\Omega_x$, $\Omega_y$, $\Gamma_x$, $\Gamma_y$, $\Gamma_z$.

Si on dispose deux capteurs A et B dont les axes de rotation des rotors sont orthogonaux (par exemple disposés selon le schéma de la figure 2), et si on inverse le sens de rotation des moyens moteurs du second capteur de façon que son rotor soit animé d'un moment cinétique–H opposé au précédent, les forces $F_{2/1}$, $F_{2/2}$, $F_{2/3}$ le maintenant en équilibre sont :

$F_{2/1} + F_{2/2} + F_{2/3} = m\,\Gamma_y$

$\frac{R\sqrt{3}}{2}(F_{2/3} - F_{2/1}) = H\Omega_z - md\,\Gamma_z$

$\frac{-R}{2}(F_{2/3} + F_{2/1}) = -H\Omega_y + md\,\Gamma_y$

La connaissance des six forces s'exerçant sur les deux rotors respectifs des deux capteurs permet de connaître les six composantes $\Omega_i$, $\Gamma_j$ cherchées en résolvant le système d'équations linéaires par les groupes ci-dessus.

$\Gamma_x = \frac{1}{m}[F_{2/1} + F_{2/2} + F_{2/3}$ù

$\Gamma_y = \frac{R}{4md}[\sqrt{3}F_{1/2} - \sqrt{3}F_{1/3} - F_{2/3} - F_{2/1}]$

$\Gamma_z = \frac{1}{m}[F_{1/1} + F_{1/2} + F_{1/3}]$

$\Omega_x = \frac{d}{H}(F_{2/1} + F_{2/2} + F_{2/3} + \frac{R}{2H}(F_{1/3} + F_{1/2})$

$\Omega_y = \frac{R}{2H}(\sqrt{3}F_{1/2} - \sqrt{3}F_{1/3} + F_{2/3} + F_{2/1})$

$\Omega_z = \frac{d}{H}(F_{1/1} + F_{1/2} + F_{1/3}) - \frac{R\sqrt{3}}{2H}(F_{2/3} - F_{2/1})$

Le rotor 1 est donc relié à l'arbre d'entraînement 5 par une membrane 3 introduisant des forces et des moments de liaison. Par ailleurs, le rotor 1 tourne généralement dans un gaz et dans un environnement magnétique, ces deux circonstances introduisant des forces et des moments parasites.

Toutefois, ces forces et ces moments sont répétables et peuvent donc être" modélisés". Les termes de cette "modélisation" subviennent lorsqu'aucune sollicitation n'est appliquée aux capteurs, en déplaçant successivement : à partir de trois positions de consigne, le rotor d'une quantité connue et en mémorisant les efforts nécessaires, ce qui permet d'obtenir une relation matricielle caractérisant cette situation.

Cette relation matricielle est la suivante :

$$\begin{vmatrix} F_1 - F_{01} \\ F_2 - F_{02} \\ F_3 - F_{03} \end{vmatrix} = \begin{vmatrix} \alpha & \beta & \gamma \\ \gamma & \alpha & \beta \\ \beta & \gamma & \alpha \end{vmatrix} \cdot \begin{vmatrix} d_1 \\ d_2 \\ d_3 \end{vmatrix}$$

relation dans laquelle

$F_{Oi}$ est l'effort résiduel en l'absence de sollicitation,
$F_i$ est l'effort provoqué par les écarts $d_1$, $d_2$, $d_3$,
$d_j$ est l'écart de position du rotor, compté à partir de sa position de consigne,
$\alpha, \beta, \gamma$ sont des termes de raideur qui sont des fonctions de la vitesse $\omega$.

En particulier, la raideur résiduelle principale s'annule pour une vitesse de rotation déterminée, dépendant des caractéristiques mécaniques de la membrane ; en fonctionnement, on se rapprochera de cette vitesse de rotation pour découpler le rotor de l'arbre d'entraînement.

On mémorise alors, lors d'un essai de calibration du capteur les forces résiduelles $F_{Oi}$ (appelées "biais") et les termes $\alpha, \beta, \gamma$ de raideur.

Le dispositif électronique décrit ci-après permet de soustraire ces forces parasites aux mesures utiles.

Ce dispositif électronique, montré sur la figure 3, peut comporter :

— un multiplexeur 10 acquérant en séquence (à 2000 Hz environ) les six tensions continues de détection définissant la position des deux rotors des deux capteurs, ces six tensions provenant des trois détecteurs 7 que comporte chaque capteur A et B,

— un convertisseur analogique-numérique 11 transformant ces tensions en données numériques (sur 12 digits par exemple),

— une liaison par bus série 12 fournissant les signaux de détection à une unité de traitement 13 construite autour d'un processeur rapide de calcul, les tâches de cette unité de traitement (expliquées plus en détail ci-après) consistant en particulier à élaborer la commande à envoyer aux différents moteurs couples 6 des deux capteurs A et B pour asservir en position leur rotor 1, compte tenu d'une fonction de transfert optimale.

— des convertisseurs numériques/analogiques 14 à une fréquence de 2000 Hz alimentant en courant les moteurs couples 6 des capteurs (la commande numérique étant le reflet du courant, donc la force appliquée au rotor, il importe que la transformation soit précise –par exemple 16 digits).

L'unité de traitement 13 calcule les grandeurs $\Gamma_x, \Gamma_y, \Gamma_z$ et $\Omega_x, \Omega_y, \Omega_z$ définies précédemment par la relation et les envoie par le bus 12 vers un coupleur 15 puis vers l'utilisation.

L'unité de traitement 13 a donc pour rôle :

— de traiter les signaux issus des détecteurs 7 et d'élaborer les commandes des moteurs couples 6,

— d'effectuer les modélisations statiques et dynamiques,

— d'élaborer par calcul les accélérations linéaires $\Gamma_x, \Gamma_y, \Gamma_z$ et les vitesses angulaires $\Omega_x, \Omega_y, \Omega_z$ à partir des six forces définies par la relation matricielle ci-dessus,

— de gérer les commandes internes (multiplexage, séquencement, démarrage des moyens moteurs 2, 8 des deux capteurs),

— de contrôler le bon fonctionnement,

— de gérer l'interface.

En ce qui concerne le dispositif détecteur de chaque capteur, avantageusement constitué par trois détecteurs 7 disposés à 120°, ils peuvent être du type capacitif ou du type inductif.

Si l'on a recours à des détecteurs capacitifs, on pourra avoir recours au mode de réalisation montré sur la figure 4 qui représente une vue développée du détecteur.

L'élément sensible ES est compris entre trois paires d'électrodes $EL_i$, $EL'_i$ (i = 1, 2, 3) formant deux à deux les armatures d'un condensateur. Elles présentent des entrefers $e_O - e_i$ et $e_O + e_i$ (i = 1, 2, 3) les séparant du rotor, et ont une surface S.

L'ensemble est monté en pont, et est excité par une tension alternative U (à une pulsation $\omega = 2\ \Omega f$, où f est voisin de 50 kHz).

La tension $U_i$ ou $U'_i$ (i = 1, 2, 3) qui apparaît aux bornes de l'électrode supérieure (ou inférieure) est :

$$ui = U\left[\frac{1}{1 + j\omega RCi}\right] \quad \left(\text{ou } u'i = U\left[\frac{1}{1 + j\omega RC'i}\right]\right)$$

$$\text{avec} \quad Ci = \frac{\varepsilon_O S}{e_O - e_i} \qquad \left(\text{ou } C'i = \frac{\varepsilon_O S}{e_O + e'_i}\right)$$

$$\text{d'où} \quad ui \simeq U\left[\frac{e_O - e_i}{e_O + jRS\omega\varepsilon_O}\right] \quad \left(\text{ou } u'_i \simeq U\left[\frac{e_O + e_i}{e_O + jRS\omega\varepsilon_O}\right]\right)$$

$$\text{et} \quad u'_i - u_i = \frac{2\,U\,e_i}{e_O + JRS\omega\varepsilon_O} = \frac{2U}{1 + jRC_O\omega}\cdot\frac{ei}{e_O}$$

$C_O$ désignant la capacité d'un des condensateurs lorsque $e_i$ = O
$u'_i - u_i = K e_i$

La tension différentielle apparaissant aux bornes du condensateur est proportionnelle à la variation d'entrefer.

Si l'on a recours à des détecteurs du type inductif, on pourra faire appel à un mode de réalisation illustré sur la figure 5 qui montre une vue développée du détecteur.

Le schéma est alors voisin de celui montré sur la figure 4, mais les armatures des condensateurs ont été remplacées par des bobinages $BB_i$, $BB'_i$ (i = 1, 2, 3).

Ces bobinages sont placés en regard du matériau constituant le rotor qui est un matériau magnétique doux.

Comme expliqué ci-dessus, les tension $u'_i - u_i$ qui apparaissent aux bornes des bobines sont proportionnelles aux variations de l'entrefer.

Le dispositif à moteurs couples, avantageusement constitué par trois moteurs couples 6 disposés à 120°, peut être réalisé comme indiqué sur le mode de réalisation montré sur les figures 6 et 7 sur lesquelles les mêmes chiffres de référence désignent les mêmes organes que sur la figure 1.

Le rotor 1 est formé de deux parties identiques 1a, 1b, soudées à la membrane 3. Chaque partie comprend un aimant 21 dont le flux se referme par une pièce en matériau doux 22. Dans l'entrefer, l'induction magnétique β est radiale, soit dirigée vers l'extérieur de l'élément sensible, soit dirigée vers son centre.

Dans l'entrefer se trouve une bobine 24 noyée dans une pièce fixe 23 solidaire de la structure du capteur. La bobine 24 est ouverte sur 120° et trois pièces identiques plongent dans l'entrefer.

Lorsqu'un courant parcourt la bobine 24, le courant réagit avec l'induction et développe une force proportionnelle au courant qui la traverse et dirigée suivant l'axe de rotation.

Pour qu'un tel capteur puisse résister à des accélérations importantes dans le sens de l'axe de rotation arbre d'entraînement 5-rotor 1 sans que ses parties mobiles soient endommagées (on peut prévoir que le capteur soit soumis des accélérations de 10000 G), il est prévu des surfaces de butées 9 (figure 1) encadrant le rotor 1 et sur lesquelles ledit rotor 1 peut venir reposer.

Le capteur selon l'invention présente un certain nombre d'avantages résultant du fait qu'il est sensible à la fois aux vitesses angulaires et aux accélérations linéaires.

C'est ainsi que si l'on désire mesurer les trois composantes des vitesses angulaires et les trois composantes des accélérations linéaires, on peut prévoir deux capteurs conformes à l'invention coopérant entre eux, ces deux capteurs étant identiques.

En ce qui concerne le dispositif électronique permettant l'exploitation des signaux délivrés par ces deux capteurs, il est de type numérique, ce qui, d'une part simplifie la conception de chaque capteur en reportant sur une mémoire leurs différents moyens de réglage, et d'autre part élimine une partie du matériel, en élaborant la fonction de transfert, celle-ci étant réalisée par un logiciel.

Par ailleurs, les moteurs couples présents dans chaque capteur sont d'une conception simple et d'une efficacité élevée (grâce à l'induction magnétique importante, toutes les parties des bobinages participent à la création des forces).

Par ailleurs, les indications fournies par les moteurs couples sont linéaires et nécessitent des tensions peu élevées par rapport à celles qu'on pourrait rencontrer dans des moteurs couples de type capacitif.

Enfin, il est à remarquer qu'aucun contact électrique frottant n'est nécessaire entre les parties fixes et les parties tournantes du capteur.

Grâce à ces avantages, le capteur selon l'invention peut être miniaturisé : c'est ainsi que l'on a réalisé un capteur dont les dimensions s'inscrivent dans un cube de 16 mm de côté et qui présente les caractéristiques suivantes :

- au niveau constructif

vitesse de rotation du rotor = 600 Hz
moment cinétique = $1.10^{-4}$ (système MKS)
balourd = $0,1^{o}$ / sec / g

- au niveau des performances

domaine de mesure = $500^{o}$ / sec et 50 g
erreur de zéro = $0,03^{o}$ / sec ou 0,003 g

## Revendications

1. Capteur inertiel composite du type mécanique pour la mesure des vitesses angulaires et des accélérations linéaires comportant : un rotor (1) ; un arbre d'entraînement (5) coaxial audit rotor (1) et maintenu par des moyens à paliers (4) ; des moyens moteurs (2, 8) pour communiquer à cet arbre d'entraînement (5) un mouvement de rotation ; un dispositif à moteurs couples (6) pour exercer sur le susdit rotor (1) au moins trois forces; et un dispositif détecteur (7) pour déterminer la position du susdit rotor (1) par rapport à la structure du capteur, le susdit rotor (1) et le susdit arbre d'entraînement (5) étant mécaniquement reliés par une jante souple (3), déformable élastiquement, le point d'intersection de cette jante souple (3) avec l'axe de rotation du rotor définissant le centre de positionnement O du rotor (1), caractérisé par le fait que cette jante souple (3) est agencée pour laisser au susdit rotor (1) trois degrés de liberté, à savoir un degré de liberté en translation selon l'axe de rotation arbre d'entraînement (5)-rotor (1), et deux degrés de liberté en rotation autour de deux axes formant un trièdre avec ledit axe de rotation, par le fait que le centre de positionnement O du susdit rotor (1) est décalé par rapport à son centre d'inertie G, et par le fait que le dispositif à moteur couple (6) est agencé pour exercer sur le rotor (1) trois forces parallèles à son axe de rotation.

2. Capteur inertiel composite selon la revendication 1, caractérisé par le fait que la jante souple (3) est constituée par une membrane circulaire pleine perpendiculaire au susdit axe de rotation et présentant, de par sa structure, une raideur radiale linéaire élevée, une raideur axiale linéaire nulle aux environs de son point d'équilibre, une raideur angulaire élevée selon l'axe de rotation, et une raideur angulaire, selon un axe orthogonal à l'axe de rotation, nulle pour une vitesse de rotation donnée.

3. Capteur inertiel selon la revendication 1 ou 2, caractérisé par le fait que le dispositif à moteurs couples (6) comporte trois moteurs couples disposés à 120° et exerçant sur le susdit rotor (1) trois forces parallèles au susdit axe de rotation.

4. Capteur inertiel selon l'une quelconque des revendications 1 à 3, caractérisé par le fait que le dispositif détecteur (7) comporte trois détecteurs disposés à 120°.

## Patentansprüche

1. Mechanischer Mehrfach-Trägheitssensor zur Messung von Winkelgeschwindigkeiten und Linearbeschleunigungen, mit: einem Rotor (1); einer mit dem Rotor (1) koaxialen, von Lagermitteln (4) gehaltenen Antriebswelle (5); Antriebsmitteln (2, 8), um der Antriebswelle (5) eine Drehbewegung zu erteilen; einer Drehmomenterzeugungseinrichtung (6), um auf den genannten Rotor (1) zumindest drei Kräfte auszuüben; und einer Erfassungseinrichtung (7), um die Stellung des genannten Rotors (1) bezüglich der Sensorstruktur zu bestimmen, wobei der genannte Rotor (1) und die genannte Antriebswelle (5) über eine biegsame, elastisch verformbare Felge (3) mechanisch verbunden sind, und wobei der Schnittpunkt dieser biegsamen Felge (3) mit der Drehachse des Rotors den Bewegungsmittelpunkt O des Rotors (1) definiert, dadurch gekennzeichnet, daß diese biegsame Felge (3) dazu eingerichtet ist, dem Rotor (1) drei Freiheitsgrade zu geben, nämlich einen Translationsfreiheitsgrad entlang der Drehachse der Antriebswelle (5) des Rotors (1) und zwei Rotationsfreiheitsgrade um zwei Achsen, die mit der genannten Drehachse ein Koordinatendreibein bilden, daß der Bewegungsmittelpunkt O des genannten Rotors (1) bezüglich dessen Trägheitszentrum G versetzt ist, und daß die Drehmomenterzeugungseinrichtung (6) dazu eingerichtet ist, um auf den Rotor (1) drei zu seiner Drehachse parallele Kräfte auszuüben.

2. Mehrfach-Trägheitssensor nach Anspruch 1, dadurch gekennzeichnet, daß die biegsame Felge (3) durch eine kreisförmige Membran gebildet ist, die zur genannten Drehachse exakt senkrecht steht und auf Grund ihrer Struktur eine hohe lineare radiale Steifigkeit, eine lineare axiale Steifigkeit von Null um ihren Gleichgewichtspunkt, eine hohe winkelmäßige Steifigkeit um die Drehachse und eine winkelmäßige Steifigkeit von Null um eine zur Drehachse orthogonale Achse für eine gegebene Rotationsgeschwindigkeit aufweist.

3. Trägheitssensor nach Anspruch 1 oder 2, dadurch gekennzeichnet, daß die Drehmomenterzeugungseinrichtung (6) drei Drehmomenterzeuger aufweist, die zu 120° angeordnet sind und auf den genannten Rotor (1) drei zur genannten Drehachse parallele Kräfte ausüben.

4. Trägheitssensor nach einem der Ansprüche 1 bis 3, dadurch gekennzeichnet, daß die Erfassungseinrichtung (7) drei zu 120° angeordnete Detektoren aufweist.

## Claims

1. A composite mechanical inertial sensor for measuring angular velocities and linear accelerations, comprising : a rotor (1) ; a drive shaft (5) coaxial of the rotor (1) and retained by plain bearing means (4) ; drive means (2, 8) for rotating the drive shaft (5) ; torque motor means (6) for applying at least three forces to the rotor (1) ; and detector means (7) for determining the position of the rotor (1) relatively to the sensor structure, the rotor (1) and the drive shaft (5) being mechanically coupled together by a resiliently deformable flexible rim (3), the intersection point between the same and the rotational axis of the rotor (1) defining the zero centre position of the rotor (1), characterised in that the flexible rim (3) is adapted to leave the rotor (1) with three degrees of freedom, viz. a degree of freedom in displacement along the rotational axis of the drive shaft (5) and rotor (1) and two degrees of freedom in rotation around two axes forming a trihedron with the latter rotational axis, the zero centre position (O) of the rotor (1) is offset from its inertia centre (G), and the torque motor means (6) are adapted to apply to the rotor (1) three forces parallel to its rotational axis.

2. A sensor according to claim 1, characterised in that the flexible rim (3) is embodied by a solid circular diaphragm perpendicular to the rotational axis of the rotor (1) and having by virtue of its structure high radial linear stiffness, zero axial linear stiffness near its balance point, high angular stiffness along the axis of rotation and, along an axis perpendicular to the rotational axis, zero angular stiffness at a given speed of rotation.

3. A sensor according to claim 1 or 2, characterised in that the torque motor means (6) comprise three torque motors disposed at a spacing of 120° relatively to one another and applying to the rotor (1) three forces parallel to its rotational axis.

4. An inertial sensor according to any of claims 1 to 3, characterised in that the detector means (7) comprise three detectors spaced 120° apart from one another.

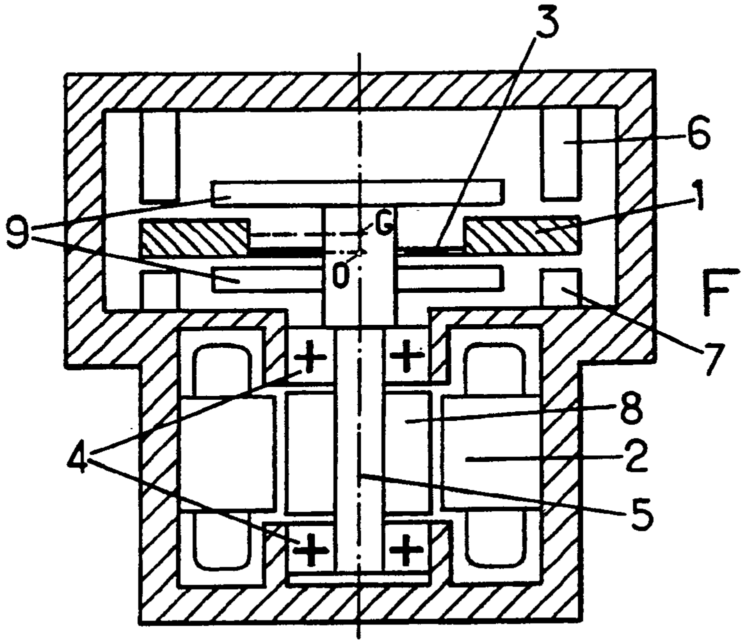


FIG.1.

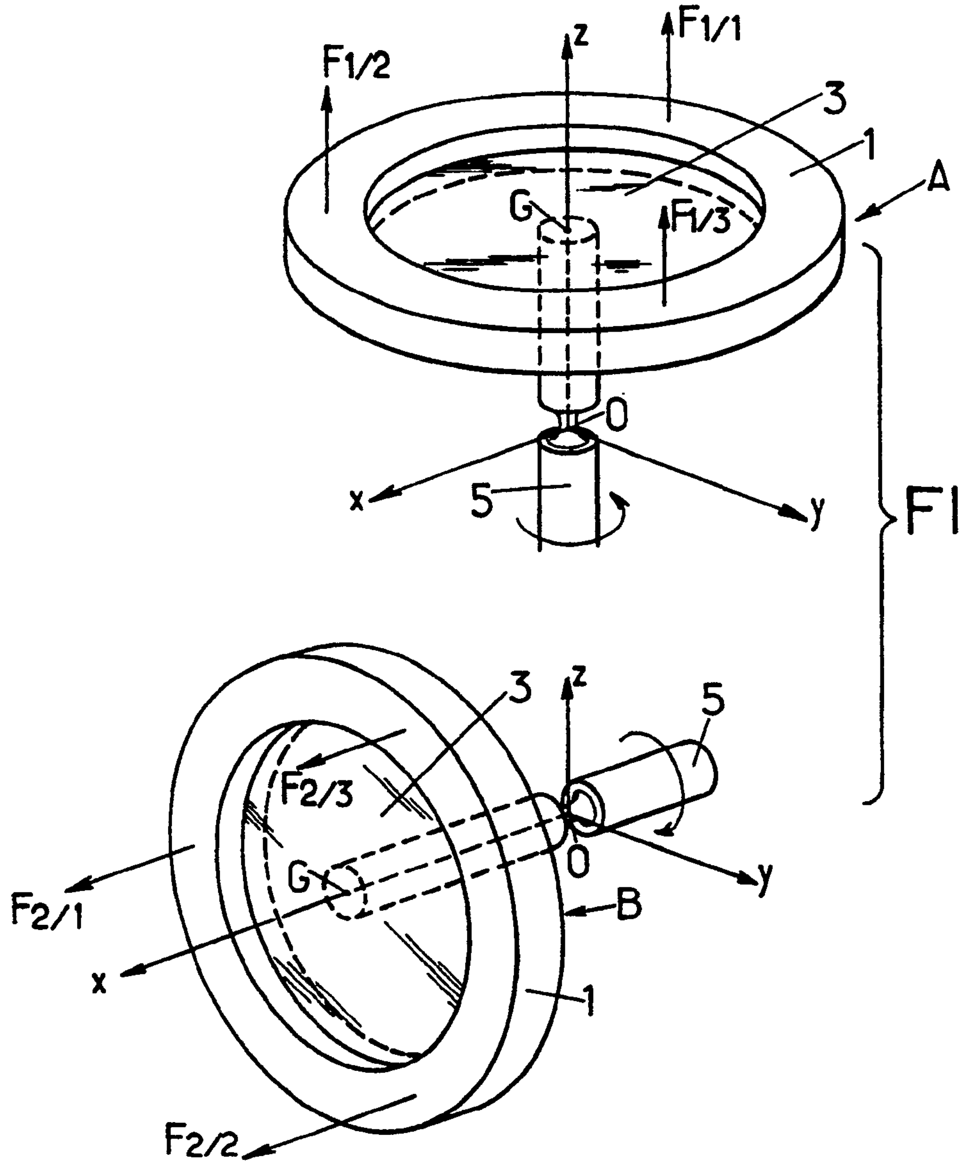


FIG.2.

FIG.3.

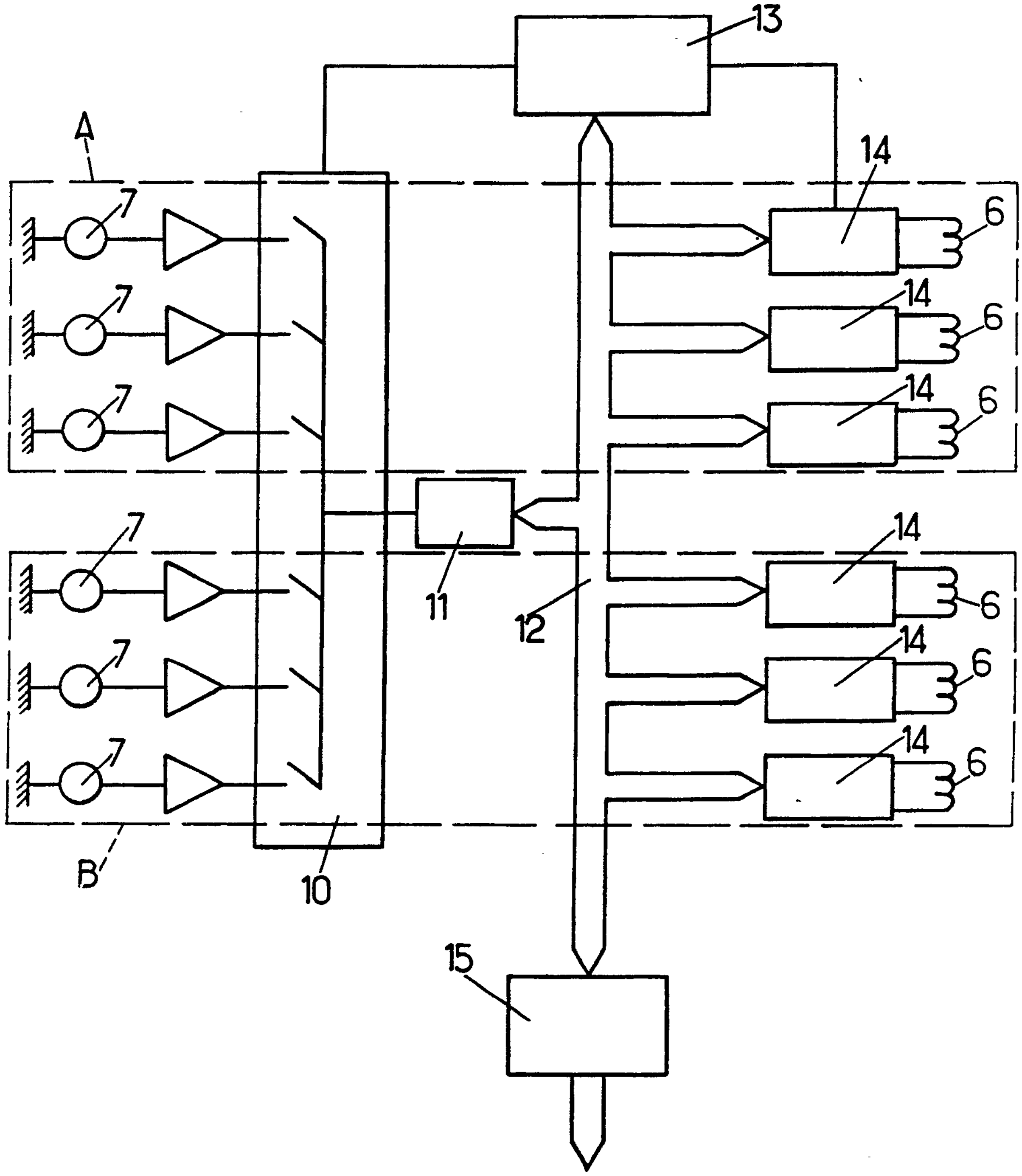

FIG.4.

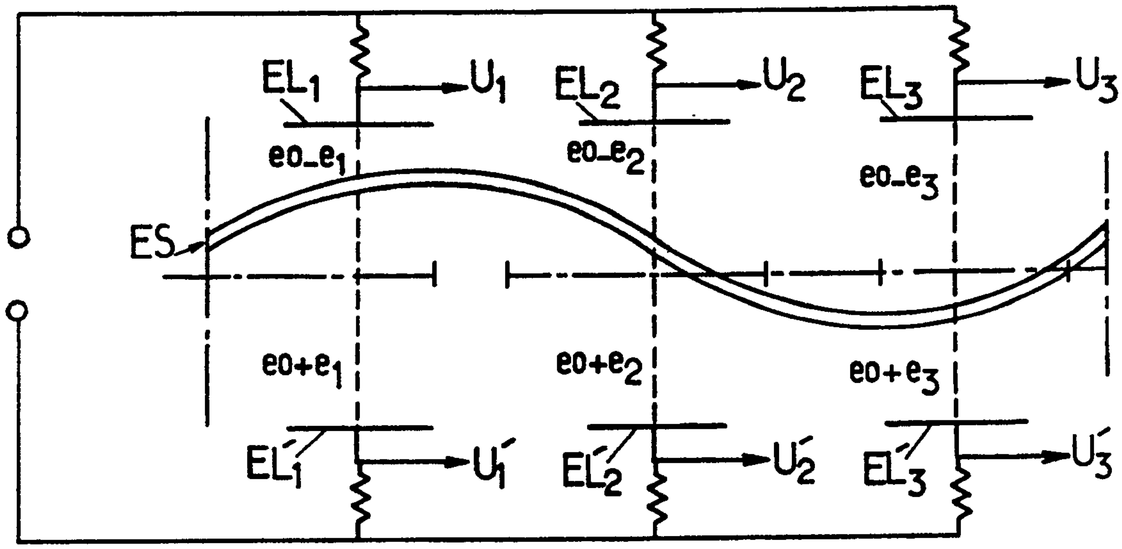
EL1
U1
EL2
U2
EL3
U3
eo-e1
eo-e2
eo-e3
ES
eo+e1
eo+e2
eo+e3
EL'1
U'1
EL'2
U'2
EL'3
U'3

FIG.5.

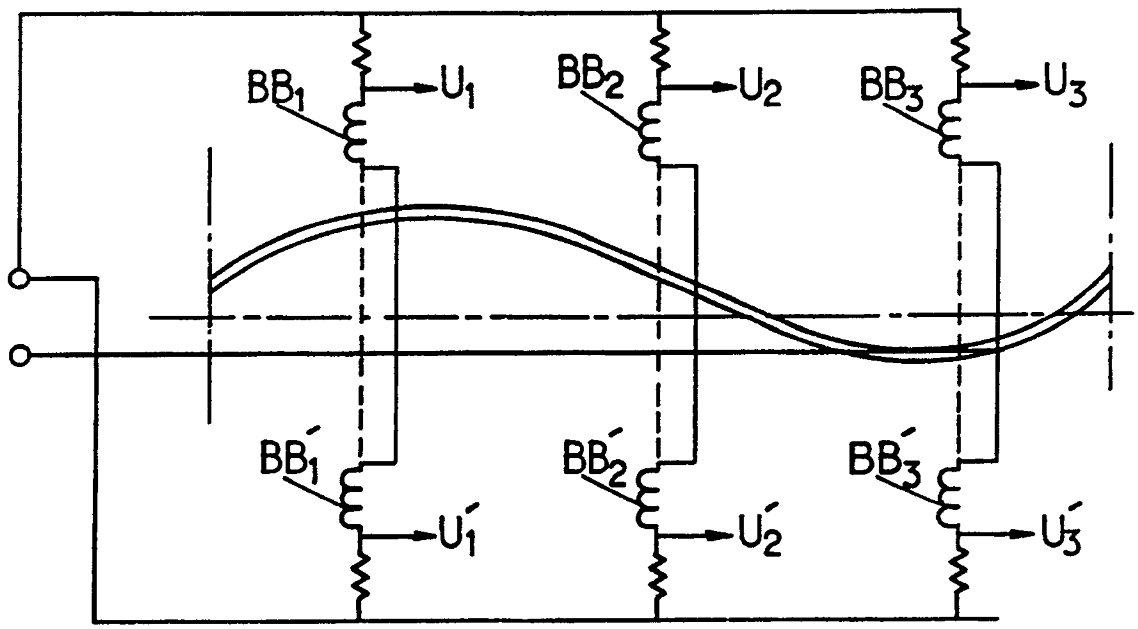
BB1
U1
BB2
U2
BB3
U3
BB'1
U'1
BB'2
U'2
BB'3
U'3

FIG.6.

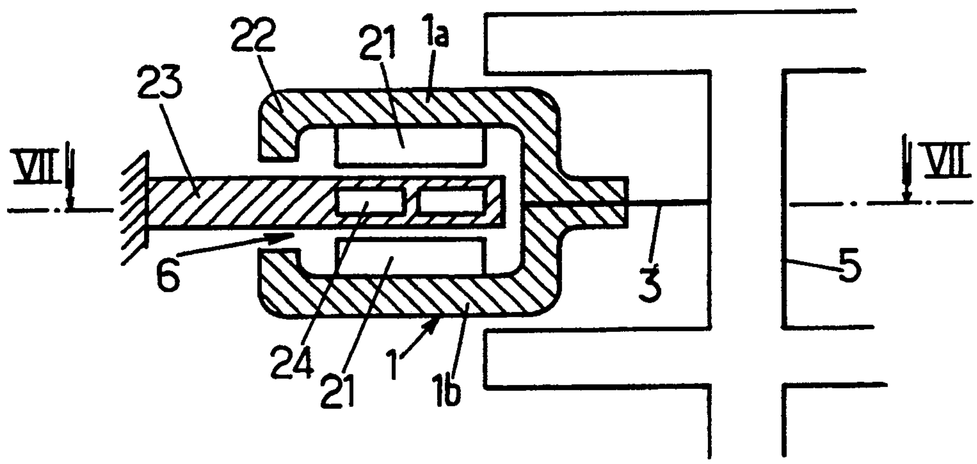


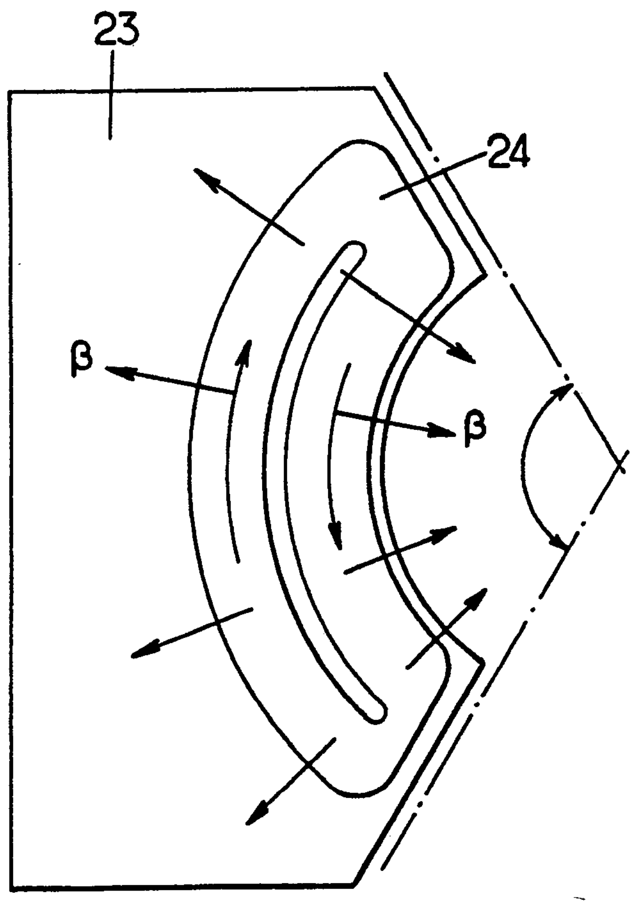


FIG.7.